# EUROPEAN PATENT APPLICATION

(11) **EP 2 490 035 A1**
(43) Date of publication of application: **22.08.2012**
(21) Application number: 10823057.4
(22) Date of filing: 09.10.2010
(51) Int. Cl.: G01R 31/40, G01R 19/02, G01K 3/00

(54) **SELF-DIAGNOSIS METHOD AND SYSTEM FOR WIRELESS DATA SERVICE DEVICE**

(30) Priority: 16.10.2009 CN 200910178332
(71) Applicant: Huawei Device Co., Ltd., Shenzhen, Guangdong 518129 (CN)
(72) Inventor: JIN, Linfang, Shenzhen, Guangdong 518129 (CN)
(74) Representative: Pfenning, Meinig & Partner GbR
(86) International application number: PCT/CN2010/077606
(87) International publication number: WO 2011/044827

(57) **Abstract**

Embodiments of the present invention relate to data service device technologies, and disclose a self-diagnosis method and system of a wireless data service device are provided. The method includes: obtaining an effective value of a working parameter of a DC-DC under a low power consumption working mode in a device; determining a fault in the device if a difference between the effective value of the working parameter and a normal parameter is greater than a preset threshold. According to the embodiments of the present invention, the fault of the data service terminal device with a high heat flux density caused by a slow failure of the DC-DC may be prevented from becoming more severe, thereby ensuring safety of the data service terminal device in use.

## Description

This application claims priority to Chinese Patent Application No. 200910178332.8, filed with the Chinese Patent Office on October 16, 2009 and entitled "SELF-DIAGNOSIS METHOD AND SYSTEM OF A WIRELESS DATA SERVICE DEVICE", the contents of which are all incorporated herein by reference in their entireties.

### FIELD OF THE INVENTION

The present invention relates to the field of data service device technologies, and in particular, to a self-diagnosis method and system of a wireless data service device.

### BACKGROUND OF THE INVENTION

Compared with the 2G, the data service is a major force that drives the development of the 3G market. Different from the traditional 2G voice service, the data service has operation conditions such as long-time use and great power consumption. For example, when a STICK data card that is widely popular on the market is used to the limit, a current is up to 500 to 700 mA, and a heat flux density is up to 200 W/L, which is much higher than that of other consumer electronic products, and thermal properties thereof are of great concern. Due to reasons such as monthly subscription, even if a subscriber does not use the data service, the subscriber maintains the online state for a long time, and is in a low power consumption mode, including a standby mode (a standby current < 100 mA) and a low power consumption mode (the data service runs under a strong signal; merely connection is maintained, and a working current << 300 mA). A wireless broadband data service is implemented by mainly using products such as data cards (independent products outside laptops and desktop computers) and modules (embedded in laptops and automobiles). A voltage of an external power supply of the products is usually 5 V or 3.3 V, which needs to be converted to a working voltage of 1 V to 4 V required by the operation of the baseband and radio frequency by using a DC-DC (direct current to direct current). However, in the production and actual use, an abrupt load change generated in plugging or pulling out the products would cause an overshoot and surge of the external power supply, thereby leading to a failure of the DC-DC. The feature of a manufacture and market failure of the products is an internal partial short circuit, but the service may still be implemented, and the products can still pass the production verification and check. However, after the products enter the market, as the time passes by, the short circuit is gradually deteriorated, which may finally lead to a complete short circuit or even a fire.

In order to avoid such transient failure caused by the overshoot and surge, usually a fuse or a current-limiting chip is added at a front end of the DC-DC, or a high-standard TVS (Transient Voltage Suppressor, transient voltage suppressor) is used.

However, in the production and actual use, even if the fuse or current-limiting chip is added at the front end of the DC-DC, the DC-DC still has a partial short circuit failure phenomenon, and the TVS is mainly used for ESD (Electro-Static Discharge, electro-static discharge) protection, and cannot provide effective protection against surges and overshoots. In the prior art, the preventions for the transient failure cannot effectively prevent the generation and development of a slow failure.

### SUMMARY OF THE INVENTION

Embodiments of the present invention provide a self-diagnosis method and system of a wireless data service device, which may prevent a fault in a data service terminal device with a high heat flux density caused by a DC-DC slow failure from becoming more severe, and avoid an engineering problem that the DC-DC relies solely on transient protection.

Accordingly, the embodiments of the present invention provide the following technical solutions.

A self-diagnosis method of a wireless data service device includes:
obtaining an effective value of a working parameter of a DC-DC under a low power consumption working mode in a device; and
determining a fault in the device if a difference between the effective value of the
working parameter and a normal parameter value is greater than a preset threshold.

A self-diagnosis system of a wireless data service device includes:
a working parameter obtaining unit, configured to obtain an effective value of a working parameter of a DC-DC under a low power consumption working mode in a device;
a comparing unit, configured to compare the effective value of the working parameter and a normal parameter value; and
a fault determining unit, configured to determine a fault in the device when a comparison result of the comparing unit is that a difference between the effective value of the working parameter and the normal parameter value is greater than a preset threshold.

It can be seen from the above that, by obtaining the effective value of the working parameter of the DC-DC under the low power consumption working mode in the device and checking the difference between the effective value of the working parameter and the normal parameter value, the fault in the device can be determined when the difference is greater than the preset threshold. Therefore, the fault in the data service terminal device with the high heat flux density caused by the slow failure of the DC-DC may be prevented from becoming more severe, thereby ensuring safety of the data service terminal device in use.

### BRIEF DESCRIPTION OF THE DRAWINGS

FIG. 1 is a flow chart of a self-diagnosis method of a wireless data service device according to an embodiment of the present invention;
FIG. 2 is a flow chart of a specific implementation of a self-diagnosis method of a wireless data service device according to an embodiment of the present invention;
FIG. 3 is a flow chart of another specific implementation of a self-diagnosis method of a wireless data service device according to an embodiment of the present invention;
FIG. 4 is a schematic structure diagram of a self-diagnosis system of a wireless data service device according to an embodiment of the present invention; and
FIG. 5 is a schematic diagram of dynamic power consumption and heating of a DC-DC under a normal state in a wireless terminal.

### DETAILED DESCRIPTION OF THE EMBODIMENTS

In order to make persons skilled in the art understand the solutions of the embodiments of the present invention better, the following further describes the embodiments of the present invention in detail with reference to the accompanying drawings and implementations.

In a self-diagnosis method and system of a wireless data device provided by the embodiments of the present invention, for wireless data service devices with a dynamic power consumption feature, based on DC-DC failure analysis and comparison between a faulty device and a normal device, under a standby mode or low transmission power, an effective value of a working parameter of a DC-DC, such as a current of the whole device or a temperature near the DC-DC, under a low power consumption working mode is monitored, and is compared with that in a normal state to make a self-diagnosis judgment, so as to avoid that a DC-DC failure develops to a severe accident and ensure safety of the data service terminal device in use.

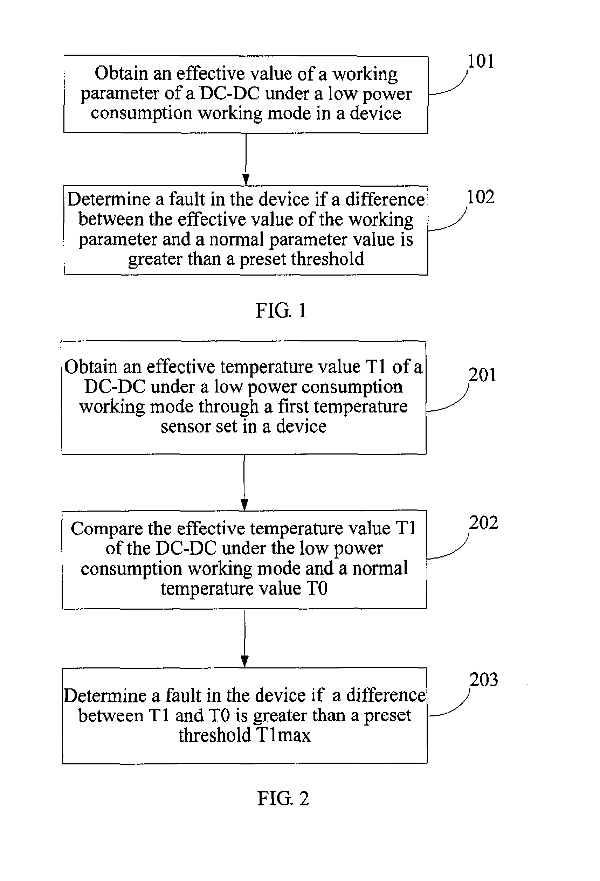

FIG. 1 is a flow chart of a self-diagnosis method of a wireless data service device according to an embodiment of the present invention, which includes the following steps.

Step 101: Obtain an effective value of a working parameter of a DC-DC under a low power consumption working mode in a device.

In the embodiment of the present invention, the effective value of the working parameter may be an effective temperature value or an effective current value. Definitely, the effective value of the working parameter may also be effective values of other working parameters capable of reflecting whether the DC-DC works normally, which will be described in detail below.

Step 102: Determine a fault in the device if a difference between the effective value of the working parameter and a normal parameter value is greater than a preset threshold.

In the embodiment of the present invention, after the device self-diagnoses the fault in the device, the device may further prompt a user that the device cannot be used due to the fault. Specifically, the device may prompt the user of the fault in the device through an abnormal indication of an indicator light; alternatively, the device may also prompt the user of the fault in the device by providing a self-diagnosis menu for the user. Definitely, prompting manners in the embodiment of the present invention is not limited to the two prompting manners, and other prompting manners may also be used.

In the self-diagnosis method of the wireless data service device provided by the embodiment of the present invention, by obtaining the effective value of the working parameter of the DC-DC under the low power consumption working mode in the device and checking the difference between the effective value of the working parameter and the normal parameter value, the fault in the device can be determined if the difference is greater than the preset threshold. Therefore, the fault in a data service terminal device with a high heat flux density caused by a slow failure of the DC-DC may be prevented from becoming more severe, thereby ensuring safety of the data service terminal device in use.

In the foregoing statement, in the embodiment of the present invention, the effective value of the working parameter may be an effective temperature value or an effective current value. The following describes the monitoring and diagnosis of these two different parameters respectively in detail.

FIG. 2 is a flow chart of a specific implementation of a self-diagnosis method of a wireless data service device according to an embodiment of the present invention. The method includes the following steps.

Step 201: Obtain an effective temperature value T1 of a DC-DC under a low power consumption working mode through a set first temperature sensor.

Specifically, the first temperature sensor may be set near the DC-DC, and in this way, the effective temperature value T1 of the DC-DC under the low power consumption working mode may be obtained.

Since an efficiency of the DC-DC is up to 80-90% when the DC-DC is normal, the heat generated by the DC-DC is relatively low, especially when the DC-DC is in a low power consumption working mode, such as a scenario with standby current I < 100 mA, and a scenario with strong signal and low transmission power (for example, output power Pout ⇐ 0 dBM, and current I < 250 mA). When a leakage current in the case of a short circuit failure is great (for example current I > 350 mA), the temperature is much higher than a normal value. Therefore, it may be determined whether the fault occurs by monitoring a temperature change of the DC-DC. Specifically, a temperature change of the first temperature sensor may be monitored by a CPU.

In order to avoid the influence of fluctuation of wireless dynamic power consumption, a temperature value of the first temperature sensor may be obtained 5 to 10 minutes after the device enters low power consumption, and the temperature value is used as the effective temperature value T1.

Step 202: Compare the effective temperature value T1 of the DC-DC under the low power consumption working mode with a normal temperature value T0.

The normal temperature value T0 may be a value obtained through experiments, or a value monitored by a set second temperature sensor in real time. Specifically, the second temperature sensor may be set away from the DC-DC. For example, the second temperature sensor may be set at other positions in the device, and a temperature change of the second temperature sensor may be monitored by the CPU.

Step 203: Determine a fault in the device if a difference between T1 and T0 is greater than a preset threshold T1max.

Definitely, in the embodiment of the present invention, the effective value of the working parameter may also be the difference between the effective temperature value and the normal temperature value, and accordingly, the normal parameter value is a rated temperature difference.

In a specific implementation process, the effective temperature value T1 of the DC-DC under the low power consumption working mode may be obtained by the first temperature sensor set near the DC-DC; the normal temperature value T2 may be obtained by the second temperature sensor set away from the DC-DC; then the difference ΔT between the effective temperature value T1 and the normal temperature value T2 is calculated and compared with the rated temperature difference; if the difference ΔT between T1 and T2 is greater than the rated temperature difference by a preset threshold ΔTmax, a fault in the DC-DC is determined, that is to say, the device has a fault and the user cannot use the device again.

It should be noted that, in order to avoid the influence of fluctuation of wireless dynamic power consumption, a temperature value of the first temperature sensor may be obtained 5 to 10 minutes after the device enters low power consumption, and the temperature value is used as the effective temperature value T1.

It can be seen that, in the self-diagnosis method of the wireless data service device provided by the embodiment of the present invention, the temperature near the DC-DC under the low power consumption working mode is monitored and compared with that in a normal state, so that the device makes a self-diagnosis judgment, thereby avoiding that a slow failure of the DC-DC develops to a severe accident, and ensuring safety of the data service terminal device in use.

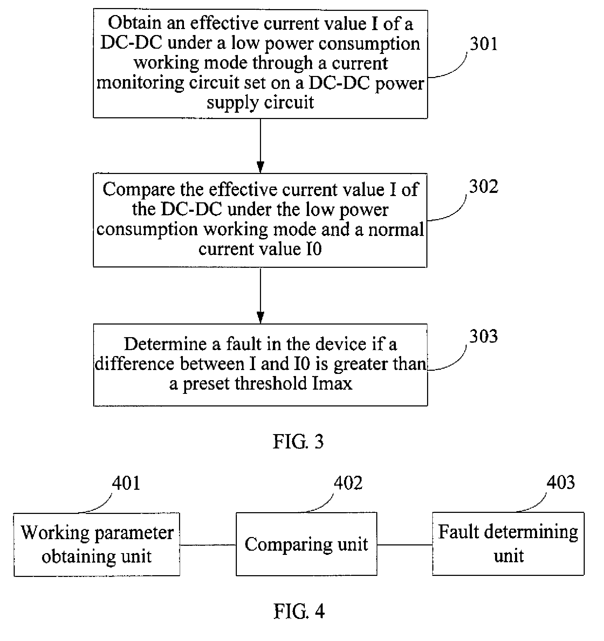

FIG. 3 is a flow chart of another specific implementation of a self-diagnosis method of a wireless data service device according to an embodiment of the present invention. The method includes the following steps.

Step 301: Obtain an effective current value I of a DC-DC under a low power consumption working mode through a current monitoring circuit set on a DC-DC power supply circuit.

Step 302: Compare the effective current value I of the DC-DC under the low power consumption working mode and a normal current value I0.

Step 303: Determine a fault in the device if a difference between I and 10 is greater than a preset threshold Imax.

For example, if it is required to test a current of the DC-DC, a current monitoring circuit may be set on the DC-DC power supply circuit. In order to avoid the influence of fluctuation of wireless dynamic power consumption, the current value acquired from the current monitoring circuit may be obtained 30 to 60 seconds after the device enters low power consumption working mode, and the current value is used as the effective current value.

It can be seen that, in the self-diagnosis method of the wireless data service device provided by the embodiment of the present invention, the current value of the DC-DC under the low power consumption working mode is monitored and compared with that in a normal state, so that the device makes a self-diagnosis judgment, thereby avoiding that a slow failure of the DC-DC develops to a severe accident, and ensuring safety of the data service terminal device in use.

It may be understood by persons of ordinary skill in the art that, all of or a part of steps in the method according to the embodiments may be implemented by relevant hardware under the instruction of programs. The programs may be stored in a computer readable storage medium. The storage medium may be a ROM/ RAM, a magnetic disk, or an optical disk.

Accordingly, an embodiment of the present invention further provides a self-diagnosis system of a wireless data service. FIG. 4 shows a schematic structure diagram of the system.

In the embodiment, the system includes:
a working parameter obtaining unit 401, configured to obtain an effective value of a working parameter of a DC-DC under a low power consumption working mode in a device;
a comparing unit 402, configured to compare the effective value of the working parameter with a normal parameter value; and
a fault determining unit 403, configured to determine a fault in the device when a comparison result of the comparing unit 402 is that a difference between the effective value of the working parameter and the normal parameter value is greater than a preset threshold.

In the self-diagnosis system of the wireless data service device provided by the embodiment of the present invention, by obtaining the effective value of the working parameter of the DC-DC under the low power consumption working mode in the device and comparing the difference between the effective value of the working parameter and the normal parameter value, the fault in the device can be determined if the difference is greater than the preset threshold. Therefore, a fault in a data service terminal device with a high heat flux density caused by a slow failure of the DC-DC may be prevented, thereby ensuring safety of the data service terminal device in use.

For further use convenience of a user, the system is capable of prompting the user in time after the fault is diagnosed. The system according to the embodiment of the present invention may further include: an indication unit or a prompt unit.

The indication unit is configured to prompt the user of the fault in the device through an abnormal indication of an indicator light after the fault determining unit 403 determines the fault in the device.

The prompt unit is configured to prompt the user of the fault in the device by providing a self-diagnosis menu to the user after the fault determining unit 403 determines the fault in the device.

In this way, after self-diagnosing the fault in the device, the device is capable of prompting the user in time, so as to avoid that a slow failure of the DC-DC develops to a severe accident, and ensure safety of the data service terminal device in use.

It should be noted that, in the embodiment of the present invention, the effective value of the working parameter may be an effective temperature value or an effective current value. Accordingly, the above units may also have different implementation manners.

It is assumed that a temperature near the DC-DC under the low power consumption working mode is monitored and compared with that in a normal state, so that the device makes a self-diagnosis judgment.

In a specific embodiment of the system of the present invention, the working parameter obtaining unit 401 is specifically configured to obtain an effective temperature value of the DC-DC under the low power consumption working mode through a first temperature sensor set near the DC-DC; and the comparing unit 402 is specifically configured to compare the effective temperature value of the DC-DC under the low power consumption working mode and a normal temperature value.

The normal temperature value may be a value obtained through experiments, or a value monitored by a second temperature sensor set away from the DC-DC in real time. Accordingly, in this embodiment, the system may further include: a normal temperature value obtaining unit, configured to obtain the normal temperature value through the second temperature sensor set away from the DC-DC.

Definitely, the effective value of the working parameter may also be a difference between the effective temperature value and the normal temperature value, and accordingly, the normal parameter value is a rated temperature difference.

Accordingly, in another specific embodiment of the system of the present invention, the working parameter obtaining unit 401 includes:
a first temperature obtaining sub-unit, configured to obtain an effective temperature value T1 of the DC-DC under the low power consumption working mode through the first temperature sensor set near the DC-DC;
a second temperature obtaining sub-unit, configured to obtain a normal temperature value T2 through the second temperature sensor set away from the DC-DC;
a calculation sub-unit, configured to calculate a difference ΔT between the effective temperature value T1 and the normal temperature value T2; and
a comparing unit 402, configured to compare the difference ΔT with a rated temperature difference.

It is assumed that a temperature near the DC-DC under the low power consumption working mode is monitored and compared with that in a normal state, so that the device makes a self-diagnosis judgment.

In a specific embodiment of the system of the present invention, the working parameter obtaining unit 401 is specifically configured to obtain an effective current value of the DC-DC under the low power consumption working mode through a current monitoring circuit set on a DC-DC power supply circuit; and the comparing unit 402 is specifically configured to compare the effective current value of the DC-DC under the low power consumption working mode and a normal current value.

It can be seen that, in the self-diagnosis system of the wireless data service device according to the embodiment of the present invention, based on DC-DC failure analysis and comparison between a faulty device and a normal device, under a standby or low transmission power mode, the effective value of the working parameter of the DC-DC, such as a current of the whole device or a temperature near the DC-DC, under the low power consumption working mode is monitored and compared with that in a normal state to make a self-diagnosis judgment, so as to avoid that a DC-DC slow failure develops to a severe accident and ensure safety of the data service terminal device in use. Furthermore, the system satisfies the requirements for small size and low cost.

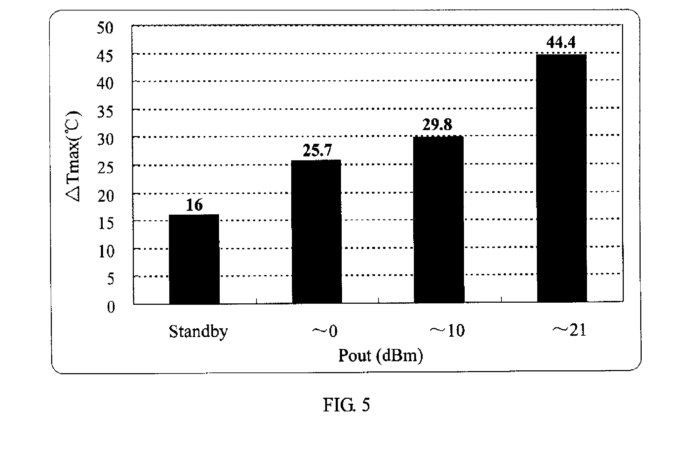

The solutions according to the embodiments of the present invention are applicable to wireless terminal products, and power consumption thereof shows a dynamic power consumption feature along with a service state, as shown in FIG. 5. In normal use, the current consumption is low and a temperature rise of the DC-DC is low under a standby mode; under a scenario of strong signal with low transmission power, the temperature rise of the DC-DC has an obvious increase; and under a scenario of weak signal with high load, the DC-DC may reach a relatively high temperature. If the device has a fault, under the standby or low transmission power mode, the DC-DC may reach a temperature rise of the high load. Through the solution according to the embodiment of the present invention, the device is enabled to automatically detect an abnormity of the DC-DC.

The solutions according to the embodiments of the present invention are applicable to all components with a gradually developing failure mode that currently shows a partial short circuit. The work process of the present invention may be divided into a low power consumption mode and a normal high power consumption mode, so as to ensure safety of the components in use.

The embodiments of the present invention have been described in detail in the foregoing statement. Specific embodiments are used for the illustration of the present invention. The above descriptions of the embodiments merely help to understand the method and device of the present invention. Meanwhile, persons of ordinary skill in the art may make modifications to the specific implementation manners and application ranges according to the idea of the present invention. In conclusion, the content of the specification shall not be construed as a limitation to the present invention.

## Claims

1. A self-diagnosis method of a wireless data service device, comprising:
obtaining an effective value of a working parameter of a DC-DC under a low power consumption working mode in a device; and
determining a fault in the device if a difference between the effective value of the working parameter and a normal parameter value is greater than a preset threshold.

2. The method according to claim 1, wherein the effective value of the working parameter is an effective temperature value, and the normal parameter value is a normal temperature value; the obtaining the effective value of the working parameter of the DC-DC under the low power consumption working mode in the device comprises:
obtaining the effective temperature value of the DC-DC under the low power consumption working mode through a set first temperature sensor.

3. The method according to claim 2, wherein the method further comprises:
obtaining the normal temperature value through a set second temperature sensor.

4. The method according to claim 1, wherein the effective value of the working parameter is a difference between an effective temperature value and a normal temperature value, and the normal parameter value is a rated temperature difference;
the obtaining the effective value of the working parameter of the DC-DC under the low power consumption working mode in the device comprises:
obtaining the effective temperature value T1 of the DC-DC under the low power consumption working mode through a set first temperature sensor;
obtaining a normal temperature value T2 through a set second temperature sensor; and
calculating the difference between the effective temperature value T1 and the normal temperature value T2.

5. The method according to claim 1, wherein the effective value of the working parameter is an effective current value, and the normal parameter value is a normal current value;
the obtaining the effective value of the working parameter of the DC-DC under the low power consumption working mode in the device comprises:
obtaining the effective current value of the DC-DC under the low power consumption working mode through a current monitoring circuit set on a DC-DC power supply circuit.

6. The method according to any one of claims 1 to 5, wherein the method further comprises:
after determining the fault in the device, prompting a user of the fault in the device through an abnormal indication of an indicator light; or
after determining the fault in the device, prompting a user of the fault in the device by providing a self-diagnosis menu for the user.

7. A self-diagnosis system of a wireless data service device, comprising:
a working parameter obtaining unit, configured to obtain an effective value of a working parameter of a DC-DC under a low power consumption working mode in a device;
a comparing unit, configured to compare the effective value of the working parameter and a normal parameter value; and
a fault determining unit, configured to determine a fault in the device when a comparison result of the comparing unit is that a difference between the effective value of the working parameter and the normal parameter value is greater than a preset threshold.

8. The system according to claim 7, wherein
the working parameter obtaining unit is specifically configured to obtain an effective temperature value of the DC-DC under the low power consumption working mode through a set first temperature sensor; and
the comparing unit is specifically configured to compare the effective temperature value of the DC-DC under the low power consumption working mode and a normal temperature value.

9. The system according to claim 8, wherein the system further comprises:
a normal temperature value obtaining unit, configured to obtain the normal temperature value through a set second temperature sensor.

10. The system according to claim 7, wherein the working parameter obtaining unit comprises:
a first temperature obtaining sub-unit, configured to obtain an effective temperature value T1 of the DC-DC under the low power consumption working mode through a set first temperature sensor;
a second temperature sub-unit, configured to obtain a normal temperature value T2 through a set second temperature sensor; and
a calculation sub-unit, configured to calculate a difference ΔT between the effective temperature value T1 and the normal temperature value T2;
wherein the comparing unit is specifically configured to compare the difference ΔT and a rated temperature difference.

11. The system according to claim 7, wherein
the working parameter obtaining unit is specifically configured to obtain an effective current value of the DC-DC under the low power consumption working mode through a current monitoring circuit set on a DC-DC power supply circuit; and
the comparing unit is specifically configured to compare the effective current value of the DC-DC under the low power consumption working mode and a normal current value.

12. The system according to any one of claims 7 to 11, wherein the system further comprises:
an indication unit, configured to prompt a user of the fault in the device through an abnormal indication of an indicator light after the fault determining unit determines the fault in the device; or
a prompt unit, configured to prompt a user of the fault in the device by providing a self-diagnosis menu for the user after the fault determining unit determines the fault in the device.

13. The system according to claim 7, wherein the system is a data card, a module or a computer with an embedded module.
